(19) Europäisches Patentamt
European Patent Office
Office européen des brevets

(11) **EP 2 281 718 B1**

(12) **EUROPEAN PATENT SPECIFICATION**

(45) Date of publication and mention
of the grant of the patent:
**16.03.2016 Bulletin 2016/11**

(51) Int Cl.:
**B60Q 1/10** *(2006.01)*    **G01S 13/93** *(2006.01)*
**B60Q 1/08** *(2006.01)*    **G06K 9/00** *(2006.01)*
**B60Q 1/14** *(2006.01)*    **F21S 8/10** *(2006.01)*

(21) Application number: **10171855.9**

(22) Date of filing: **04.08.2010**

(54) **Light distribution control system for automotive headlamp**

System zur Steuerung der Lichtverteilung eines Fahrzeugscheinwerfers

Système de contrôle de la distribution lumineuse de phares de voiture

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.08.2009 JP 2009181708**

(43) Date of publication of application:
**09.02.2011 Bulletin 2011/06**

(73) Proprietor: **Koito Manufacturing Co., Ltd.**
**Tokyo 108-8711 (JP)**

(72) Inventor: **YAMAZAKI, Atsushi**
**Shizuoka-shi, 4248764 Shizuoka (JP)**

(74) Representative: **Neobard, William John**
**Kilburn & Strode LLP**
**20 Red Lion Street**
**London WC1R 4PJ (GB)**

(56) References cited:
**EP-A1- 1 504 960        EP-A1- 1 987 985**
**WO-A1-2006/040552    DE-A1-102006 055 908**
**DE-A1-102007 038 563    US-B1- 6 430 521**

**Description**

The present invention relates to a light distribution control system for controlling the light distribution of automotive headlamps.

It has been proposed to provide a light distribution control system for controlling the light distribution of automotive headlamps structured such that the presence of leading vehicles and oncoming vehicles are detected based on images of a front area of a driver's vehicle picked up by a camera and then the light distribution pattern thereof is varied based on the detection result (See Patent Document 1 and Patent Document 2, for instance). Note herein that leading vehicle(s) and oncoming vehicle(s) may be hereinafter generically referred to as "forward vehicle" or "forward vehicles" as appropriate.

DE 10 2006 055 908 A1 discloses an automatic light control using a camera sensor for monitoring the surroundings of a motor vehicle. The camera sensor is used to record a sequence of images of the vehicle surroundings in front of the vehicle. The lane the own vehicle is driving in is calculated based on the image data. At least one measuring window along the lane is fixed in the image so that vehicles driving in front and oncoming traffic is detected. Light spots in this measuring window will be tracked in the sequence of images. The image data are used to recognize the lights of other vehicles and the headlights are controlled in such a manner that the drivers of other vehicles are not dazzled.

[Patent Document 1] Japanese Unexamined Patent Application Publication 2008-94127.

[Patent Document 2] Japanese Unexamined Patent Application Publication 2008-37240.

In the light distribution control system for controlling light distribution of automotive headlamps as described above, the field of view for the camera fixed to the driver's vehicle varies if the vehicle inclines in the longitudinal direction. This changes the positional coordinates of a forward vehicle in the images. As a result, the position of the forward vehicle cannot be detected accurately, and this may lead to giving glare to the driver of the forward vehicle.

The present invention has been made in view of the foregoing circumstances. An embodiment provides a light distribution control system for controlling the light distribution of an automotive headlamp that is less likely to give glare to the drivers of forward vehicles.

To resolve the foregoing problems, a light distribution control system, for controlling an automotive headlamp, according to one embodiment of the present invention comprises: an automotive headlamp capable of controlling a range of illumination in a front area of a vehicle; an image pickup means configured to pick up an image of the front area of the vehicle; a forward vehicle detection means configured to detect positional coordinates of a forward vehicle in said image capturing the front area of the vehicle; pitch angle detection means configured to detect a pitch angle of the vehicle; a storage means configured to store an aberration correction factor used to correct an aberration of a lens mounted on the image pickup means; a correction means configured to correct the positional coordinates of the forward vehicle detected by the forward vehicle detection means, based on the pitch angle and the aberration correction factor; and a control means configured to control the illumination range of the automotive headlamp, based on the positional coordinates corrected by the correction means, the pitch angle detection means including: an inclination angle sensor configured to detect an inclination of the vehicle, wherein the inclination of the vehicle comprises the inclination of the vehicle relative to a horizontal plane; an inclination information acquiring means configured to acquire inclination information on a road surface on which the vehicle is positioned, wherein the inclination information comprises the inclination of the road surface relative to the horizontal plane; and a pitch angle calculating means configured to calculate the pitch angle of the vehicle by subtracting the inclination of the road surface from the inclination of the vehicle.

Embodiments will now be described by way of examples only, with reference to the accompanying drawings which are meant to be exemplary, not limiting and wherein like elements are numbered alike in several Figures in which:

FIG. 1 is a schematic cross-sectional view illustrating an internal structure of an automotive headlamp used in a light distribution control system according to an embodiment of the present invention;

FIG. 2 is a schematic perspective view of a rotatable shade;

FIGS. 3A to 3F illustrate light distribution patterns that can be illuminated by an automotive headlamp according to an embodiment of the present invention;

FIG. 4 is a functional block diagram to describe a light distribution system according to an embodiment of the present invention;

FIGS. 5A to 5D are functional block diagrams to describe a change in the field of view of a camera when the orientation or posture of a vehicle varies; and

FIG. 6 is a flowchart to describe a control of light distribution patterns by a light distribution control system according to an embodiment of the present invention.

The invention will now be described by reference to the preferred embodiments. This does not intend to limit the scope of the present invention, but to exemplify the invention.

A light distribution control system, for controlling the light distribution of automotive headlamps, embodying the present invention detects the presence of a forward vehicle traveling in front of his/her own vehicle, based on an image taken by a camera that picks up images of a front area of his/her own vehicle, or by use of another type of detector, and suppresses the emission of light toward the thus-detected forward vehicle. The light distribution control system detects the pitch angle which is an inclination angle of the vehicle relative to the road surface. Then, using the pitch angle detected, the light distribution control system corrects the positional coordinates of the forward vehicle in the image taken by the camera. As a result, the positional coordinates of the forward vehicle are accurately detected and therefore glare is less likely to be experienced by a driver of the forward vehicle.

Hereinbelow, the embodiments of the present invention will be described in detail with reference to the accompanying drawings.

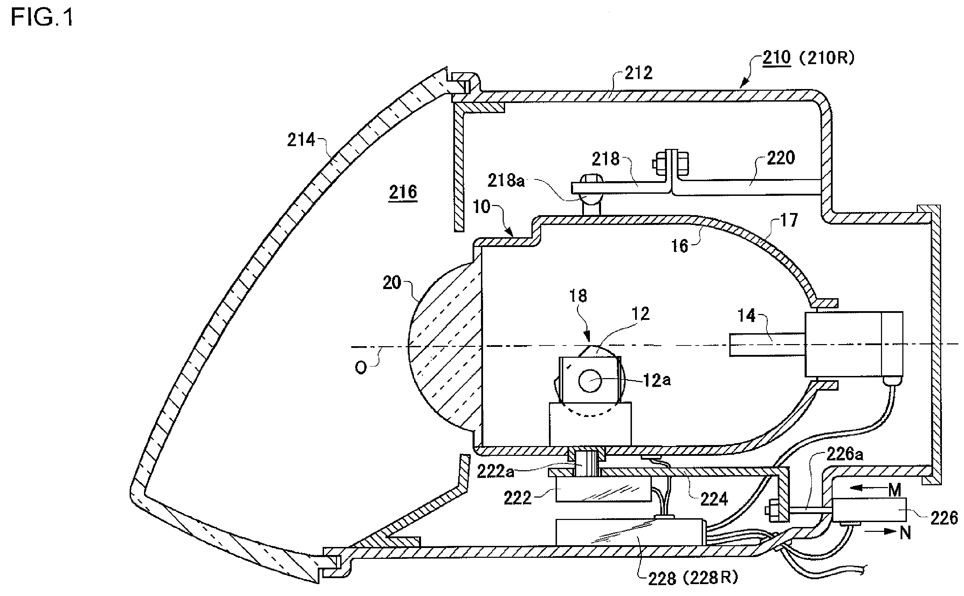

FIG. 1 is a schematic cross-sectional view illustrating an internal structure of an automotive headlamp 210 used in a light distribution control system according to an embodiment of the present invention. The automotive headlamp 210 illustrated in FIG. 1 is a light distribution variable headlamp; two are installed laterally spaced apart on the vehicle. The structures of the automotive headlamps 210 installed on both sides are practically identical to each other. In the following description, therefore, the structure of a right-hand automotive headlamp 210R will be explained as a typical example.

The automotive headlamp 210R has a lamp chamber 216, comprised of a lamp body 212 having an opening disposed frontward of a vehicle and a transparent cover covering the opening of the lamp body 212. The lamp chamber 216 contains a lamp unit 10 lighting the front area of the vehicle. A lamp bracket 218 having a pivot mechanism 218a, which is the center of a swing motion of the lamp unit 10, is formed in a part of the lamp unit 10. The lamp bracket 218 is connected with a body bracket 220, which is installed upright on an inner wall of the lamp body 212, by fasteners such as screws. Accordingly, the lamp unit 10 is fixed to a predetermined position of the lamp chamber 216, and at the same time the lamp unit 10 is capable of being varied for example in a forward leaning posture or a backward leaning posture with the pivot mechanism 218a as the center.

A rotation axis 222a of a swivel actuator 222 to constitute adaptive front-lighting system (AFS) for use in curved roadways, which illuminates the traveling direction when a driver drives along a curved roadway and the like, is fixed to the underside of the lamp unit 10. The swivel actuator 222 swivels the lamp unit 10 in the traveling direction with the pivot mechanism 218a positioned in the center, based on the data on the steering amount supplied from the vehicle, the data on the shape of a road supplied from a navigation system, the positional relationship of a forward vehicle relative to a driver's own vehicle, and so forth. As a result, the illumination range of the lamp unit 10 does not cover the front area of the vehicle but covers beyond a curve of curved roadway, thereby enlarging the field of front vision of a driver. The swivel actuator 222 may be constructed by stepping motor, for instance. If the swivel angle is fixed, a solenoid and the like may be used.

The swivel actuator 222 is fixed to a unit bracket 224. A leveling actuator 226 disposed external to the lamp body 212 is connected with the unit bracket 224. The leveling actuator 226 is configured by, for example, a motor used to elongate and contract a rod 226a in the direction of the arrows M and N, respectively. If the rod 226a elongates along the arrow M, the lamp unit 10 will swing into a backward leaning posture with the pivot mechanism 218a as the center. Conversely, if the rod 226a shortens along the arrow N, the lamp unit 10 will swing into a forward leaning posture with the pivot mechanism 218a as the center. As the lamp unit 10 takes the backward leaning posture, the leveling can be so adjusted as to place the light axis in an upward position. Also, as the lamp unit 10 takes the forward leaning posture, the leveling is so adjusted as to place the light axis in a downward position. In this manner, the light axis can be adjusted according as the vehicle is inclined forward or backward. As a result, the forward illumination reachable distance by the automotive headlamp 210 can be adjusted to an optimal distance. In other words, the range of forward illumination covered by the automotive headlamp 210 can be optimally adjusted.

It is to be noted that the leveling can also be adjusted according as the vehicle is inclined forward or backward while the vehicle is moving. For example, the vehicle is inclined backward if the vehicle accelerates while running, and the vehicle is inclined forward if the vehicle decelerates while running. Accordingly, the direction in which the automotive headlamps 210 illuminate varies according as the vehicle is inclined forward or backward, so that the distance within which the forward illumination can reach and cover becomes longer or shorter. Thus the forward illumination reachable distance can be optimally adjusted while running if the leveling is adjusted in real time based on the posture of the vehicle. This leveling adjustment is may be called "auto leveling" also.

An illumination control unit 228, which controls the turning on and off of the lamp unit 10 and controls the formation of light distribution patterns, is installed on an inner wall of the lamp chamber 216, for example, at a low position of the lamp unit 10. In the case of FIG. 1, an illumination control unit 228R for controlling the automotive headlamp 210R is placed. The illumination control unit 228R also controls the swivel actuator 222, the leveling actuator 226 and so forth.

The lamp unit 10 may have an aiming adjustment mechanism. For example, a pivot mechanism, which is the center of a swing motion when the aiming adjustment is to be done, is disposed in a connection part connecting the rod 226a of the leveling actuator 226 to the unit bracket 224. A pair of aiming adjustment screws, spaced apart from each other, which advance and retreat in the longitudinal direction of the vehicle are placed on a connection surface jointed by the body bracket 220 and the lamp bracket 218. If, for example, two aiming adjustment screws are advanced, the lamp unit 10 will be forward inclined with the aiming pivot mechanism as the center. As a result, the light axis is so adjusted as to be placed in a downward position. Similarly, if two aiming adjustment screws are retreated, the lamp unit 10 will be backward inclined with the aiming pivot mechanism as the center. As a result, the light axis is so adjusted as to be placed in an upward position. Also, if a left-side aiming adjustment screw in the vehicle width direction is advanced, the lamp unit 10 will be in a right turning posture with the aiming pivot mechanism as the center. As a result, the light axis is so adjusted as to be placed in a rightward position. Also, if a right-side aiming adjustment screw in the vehicle width direction is advanced, the lamp unit 10 will be in a left turning posture with the aiming pivot mechanism as the center. As a result, the light axis is so adjusted as to be placed in a leftward position. The aiming adjustment can be done when vehicles are shipped from a factory or they undergo an automobile safety inspection or at the time of replacement of the automotive headlamp 210. Through the aiming adjustment, the automobile headlamp 210 is adjusted to a prescribed posture which is specified by a design in the first place; the light distribution patterns according to the present embodiment are formed based on this posture.

The lamp unit 10 includes a shading mechanism 18 including a rotatable shade 12, a bulb 14 as a light source, a lamp housing 17 supporting a reflector 16 against the inner wall, and a projection lens 20. For example, incandescent lamps, halogen lamps, discharge lamps and LEDs may be used for the bulb 14. The present embodiment shows an example where the bulb 14 is a halogen lamp. The reflector 16 reflects the light emitted from the bulb 14. Part of both the light emitted from the bulb 14 and the light reflected by the reflector 16 is guided to a projection lens 20 through the rotatable shade 12 that constitutes the shading mechanism 18.

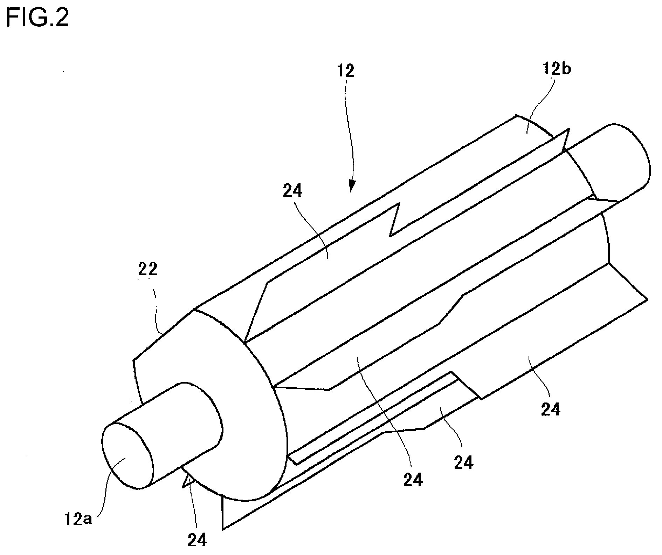

FIG. 2 is a schematic perspective view of the rotatable shade 12. The rotatable shade 12 is a cylindrically-shaped member that is rotatable about a rotation axis 12a. The rotatable shade 12 has a notch (flattened portion) 22 in which a part of the rotatable shade 12 is cut out in its axial direction, and has a plurality of plate-shaped shade plates 24 on the outer circumferential surface 12b other than the notch 22. The rotatable shade 12 can move the notch 22 or any one of the plurality of shade plates 24 to a position on the rear focal plane including the rear focal point of the projection lens 20, according to its rotation angle. Formed are light distribution patterns following the shape of ridge lines of the shade plates 24 positioned on a light axis O in association with the rotation angles of the rotatable shade 12. For example, a low beam distribution pattern or a light distribution pattern partially having characteristics of the low beam distribution pattern is formed by moving any one of the plurality of shade plates 24 onto the light axis O and thereby shading a part of the light emitted from the bulb 14. Also, a high beam distribution pattern is formed by moving the notch 22 onto the light axis O, thereby not shading the light emitted from the bulb 14.

The rotatable shade 12, which is rotatable by a shade motor (not shown), can move the shade plates 24 or the notch 22 used to form a desired light distribution pattern onto the light axis O by controlling the rotation amount of the shade motor. It is to be noted here that the notch 22 provided on the outer circumferential surface 12b of the rotatable shade 12 may not be provided at all so that the rotatable shade 12 can be designed to have the shading function only. In such a case, the rotatable shade 12 is retreated from the position of the light axis O by driving the solenoid, for example, when a high beam distribution pattern is to be formed. By employing such a structure described as above, the light distribution pattern is fixed to a low beam distribution pattern or a light distribution pattern similar thereto in the event that the shade motor rotating the rotatable shade 12 should fail. In other words, that the rotatable shade 12 is fixed to the posture for the formation of a high beam distribution pattern is reliably avoided, thereby realizing the fail-safe function.

The projection lens 20 is arranged on the light axis O that extends in the longitudinal direction of the vehicle, and the bulb 14 is arranged on a rear side of a rear focal plane of the projection lens 20. The projection lens 20 is a plano-convex aspheric lens, having a convex front surface and a plane rear surface, which projects a light source image formed on the rear focal plane onto a virtual vertical screen as a reverted image.

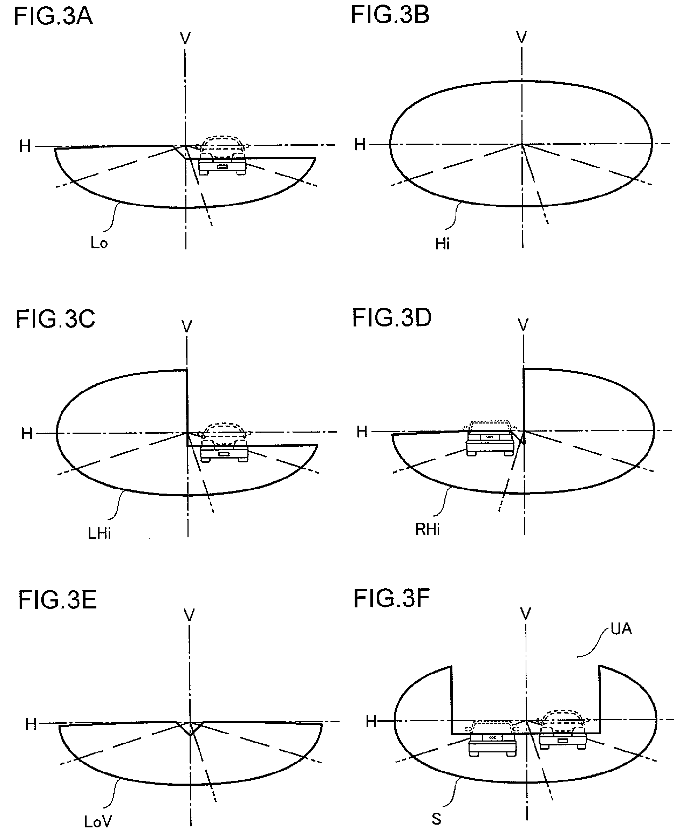

FIGS. 3A to 3F illustrate light distribution patterns that can be illuminated by the automotive headlamp 210 according to the present embodiment. FIGS. 3A to 3F illustrate the light distribution patterns each formed on a virtual vertical screen set at a point 25 meters ahead of the automotive headlamps 210. Each of the light distribution patterns shown in FIGS. 3A to 3F is a combined light distribution pattern that is formed by superimposing one of the light distribution patterns, formed by the automotive headlamps 210 installed on both ends in the vehicle width direction, onto the other thereof.

FIG. 3A illustrates a low beam distribution pattern Lo. The low beam distribution pattern Lo is a light distribution pattern so designed as not to give glare to a driver of an forward vehicle and/or pedestrians while driving on the left side. The low beam distribution pattern Lo includes a cutoff line on the side of the oncoming traffic lane, a cutoff line on the side of the driver's own lane, and a oblique cutoff line. The cutoff line on the side of the oncoming traffic lane extents parallelly with a horizontal line H on the right side of a vertical line V. The cutoff line on the side of the driver's own lane extends parallelly with the horizontal line H on the left side of the vertical line V in a position higher than the cutoff line on the side of the oncoming traffic lane. And the oblique cutoff line, which is provided between the cutoff line on the side of the oncoming traffic lane and the cutoff line on the side of the driver's own lane, connects the cutoff line on the side of the oncoming traffic lane with the cutoff line on the side of the driver's own lane. The oblique cutoff line extends obliquely from the intersection of the cutoff line on the side of the oncoming traffic lane and the cutoff line on the side of the driver's own lane toward the upper left at an angle of 45 degrees.

FIG. 3B illustrates a high beam distribution pattern Hi. The high beam distribution pattern Hi is a light distribution pattern for illuminating wide areas ahead and distant areas, and is formed, for example, when there is no need to concern about giving glare to the forward vehicle and/or pedestrians.

FIG. 3C shows a left-sided high beam distribution pattern LHi which is used in an area under "keep to the left" traffic regulations. The left-sided high beam distribution pattern LHi is a special light distribution pattern that shades the driver's own lane side of high beam distribution pattern and illuminates only the oncoming traffic lane side using a high beam region, while the vehicle is being driven on the left side. The left-sided high beam distribution pattern LHi is formed such that a left-sided high beam distribution pattern formed by a left-side automotive headlamp 210 and a low beam distribution pattern formed by a right-side automotive headlamp 210 are combined together. The left-sided high beam distribution pattern LHi formed as above is suitable for a case where there is no forward vehicles and pedestrians on the driver's own lane side and there is an oncoming vehicle and/or pedestrian on the oncoming traffic lane side. Thus, the left-sided high beam distribution pattern LHi is a light distribution pattern so designed as not to give glare to a driver of an oncoming vehicle and/or pedestrians on the oncoming traffic lane side while the driver's visibility of the road ahead is improved.

FIG. 3D shows a right-sided high beam distribution pattern RHi which is used in an area under "keep to the left" traffic regulations. The right-sided high beam distribution pattern RHi is a special light distribution pattern that shades the driver's own lane side of high beam distribution pattern and illuminates only the oncoming traffic lane side using a high beam region, while the vehicle is being driven on the left side. The right-sided high beam distribution pattern RHi is formed such that a right-sided high beam distribution pattern formed by a right-side automotive headlamp 210 and a low beam distribution pattern formed by a left-side automotive headlamp 210 are combined together. The right-sided high beam distribution pattern RHi is suitable for a case where there is a forward vehicle and/or pedestrian on the driver's own lane side and there is no oncoming vehicles and pedestrians on the oncoming traffic lane side. Thus, the right-sided high beam distribution pattern RHi is a light distribution pattern so designed as not to give glare to a driver of a forward vehicle and/or pedestrians on the driver's own traffic lane side while the driver's visibility of the road ahead is improved.

FIG. 3E shows a V-beam distribution pattern LoV that suppresses the illumination in the vicinity of the intersection of the vertical line V and the horizontal line H on the virtual vertical screen. The V-beam distribution pattern LoV forms a low beam distribution pattern as shown in FIG. 3A, for example, by the left-side automotive headlamp 210. At the same time, a low beam distribution pattern used in an area under "keep to the right" traffic regulations, namely a light distribution pattern which is line-symmetric with respect to the vertical line V of the light distribution pattern shown in FIG. 3A, is formed by the right-side automotive headlamp 210. These two different light distribution patterns are superimposed on each other. As a result, formed is a V-beam distribution pattern LoV that suppresses the illumination in the vicinity of the intersection of the vertical line V and the horizontal line H where a leading vehicle or oncoming vehicle traveling quite far from the his/her own vehicle are possibly existent. The V-beam distribution pattern LoV is a light distribution pattern designed so that obstacles on the road shoulder and the like on the driver's own lane side and oncoming traffic lane side can be easily recognized by the driver of a vehicle while suppressing glare to the driver of the forward vehicle traveling quite far.

FIG. 3F shows a split light distribution pattern S. The split light distribution pattern S is a special light distribution pattern that has a shaded region UA in a middle part above the horizontal line H and two separate high beam regions on both sides of the shaded region UA in the horizontal direction. The split distribution pattern S is formed in a manner that the left-sided high beam distribution pattern formed by the left-side automotive headlamp 210 and the right-sided high beam distribution pattern formed by the right-side automotive headlamp 210 are superimposed on each other. When the split light distribution pattern S is to be formed, the left-sided high beam distribution pattern and the right-sided high beam distribution pattern are superimposed on each other in a manner that the high beam region for the left-sided high beam distribution pattern and the high beam region for the right-sided high beam distribution pattern do not contact with each other. This forms the shaded region UA.

The range of the shaded region UA can be varied in the horizontal direction if the left-side and right-side automotive headlamps 210 are swiveled and thereby at least one of the left-sided high beam distribution pattern and the right-sided high beam distribution pattern is moved in the horizontal direction.

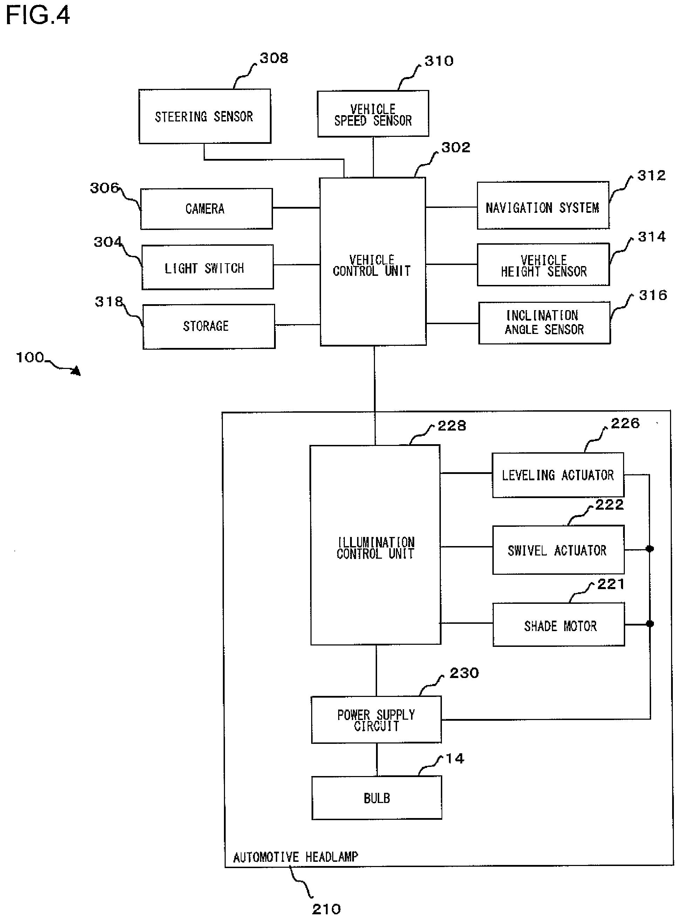

FIG. 4 is a functional block diagram to explain a light distribution system 100 according to an embodiment of the present invention. The light distribution system 100 includes the above-described automotive headlamps 210, a vehicle control unit 302 for controlling the automotive headlamps 210, a light switch 304, a camera 306, a steering sensor 308, a vehicle speed sensor 310, a navigation system 312, a vehicle height sensor 314, an inclination angle sensor 316, and a storage 318. Instead of a camera, other detection devices may be used, as will be clear to one skilled in the art. For example other detection means, such as millimeter-wave radar and infrared radar, may be used instead of the camera 306, or as well as the camera 306.

An illumination control unit 228 in the automotive headlamp 210 controls a power supply circuit 230 according to instructions given from the vehicle control unit 302 mounted on a vehicle, and controls the turning on of the bulb 14. Also, the illumination control unit 228 controls a leveling actuator 226, a swivel actuator 222, and a shade motor 221 according to instructions given from the vehicle control unit 302.

For example, when making a turn along a curve or making a left or right turn, the illumination control unit 228 controls the swivel actuator 222 so as to place the light axis of the lamp unit 10 in a traveling direction. Also, the illumination control unit 228 controls the leveling actuator 226 according as the vehicle is inclined forward or backward at the time of vehicle's acceleration or deceleration, and thereby adjusts the light axis of the lamp unit 10 in the vertical direction of the vehicle. As a result, the forward illumination reachable distance is adjusted to the optimal distance. Also, the illumination control unit 228 controls the leveling actuator 226, the swivel actuator 222, and the shade motor 221 according to instructions on the light distribution given from the vehicle control unit 302.

In the light distribution control system 100, the light distribution patterns are switchable manually if the driver sets the light switch 304 accordingly. In what is to follow, a mode in which the light distribution is controlled manually as described above will be called "manual mode" as appropriate. For example, if the driver selects the low beam distribution pattern Lo, the vehicle control unit 302 will instruct the illumination control unit 228 to form the low beam distribution pattern. Upon receipt of such an instruction, the illumination control unit 228 controls the leveling actuator 226, the swivel actuator 222 and the shade motor 221 so that the low beam distribution pattern Lo can be formed.

Also, without resorting to the light switch 304, the light distribution control system 100 can detect conditions surrounding the vehicle using various kinds of sensors and thereby can form a light distribution pattern best suited to the vehicle condition. Hereinafter, such a mode in which to control the light distribution pattern will be called "adaptive driving beam (ADB) mode" as appropriate.

In the ADB mode, for example, if a number of forward vehicles are detected ahead of the driver's own vehicle, the vehicle control unit 302 will determine that glare to the forward vehicles must be prevented. Thus, the vehicle control unit 302 instructs the illumination control unit 228 to form the low beam distribution pattern Lo, for example. Also, if the forward vehicles are detected but the driver desires to have a sufficient field of view around the forward vehicles, the vehicle control unit 302 will instruct the illumination control unit 228 to form the split light distribution pattern S where the forward vehicles are included in the shaded region UA. As described above, in the ADB mode, the light distribution pattern is so selected as to secure as much field of view in front of the driver's vehicle as possible without giving glare to the forward vehicles.

To detect a forward vehicle in such a manner as described above, the camera 306 such as a stereo camera, which is a means for recognizing a target object, is connected to the vehicle control unit 302. The image data captured by the camera 306 are transmitted to the vehicle control unit 302. Then the vehicle control unit 302 processes the signals sent from the camera 306 and analyzes the images so as to detect a forward vehicle, if any, within an image pickup range.

More specifically, the vehicle control unit 302 observes high-intensity light spots, formed by illumination of the oncoming vehicle's headlamps or the leading vehicle's tail lamps, within the image picked up by the camera, so as to detect the positional coordinates of the forward vehicle in the image. Then the vehicle control unit 302 selects a most suitable light distribution pattern that does not give glare to the forward vehicle detected. The vehicle control unit 302 instructs the illumination control unit 228 to form the thus selected light distribution pattern.

Also, the vehicle control unit 302 can also acquire information from the steering sensor 308, the vehicle sensor 310 and the like normally installed in the vehicle, so that a light distribution to be formed can be selected according to the running conditions and/or traveling posture of the vehicle, and the light distribution pattern can be varied, in a simplified manner, by varying the direction of the light axis. For example, if it is determined, based on the information sent from the steering sensor 308, that the vehicle is turning, the vehicle control unit 302 will control the rotation of the rotatable shade 12 so that a light distribution enabling to improve the field of view in the turning direction can be formed. Also, the swivel actuator 222 may be controlled by directing the light axis toward the turning direction without changing the rotating state of the shade 12 so that the field of view can be improved.

Also, the vehicle control unit 302 can acquire information on the shape and the configuration of roadway that his/her own vehicle is traveling, information on the installation of traffic signs, and the like from the navigation system 312. If these pieces of information are acquired beforehand, a light distribution pattern suitable for the roadway can be smoothly formed by controlling the leveling actuator 226, the swivel actuator 222, the shade motor 221 and the like.

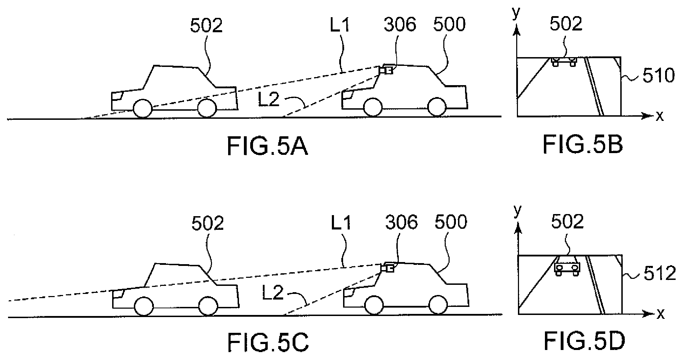

If the orientation or posture of the vehicle varies while the vehicle is moving or stops, the field of view of the camera 306 fixed to the vehicle also varies. FIGS. 5A to 5D are functional block diagrams to describe a change in the field of view of the camera when the orientation or posture of the vehicle varies.

FIG. 5A shows a vehicle 500 and a leading vehicle 502 running ahead of the vehicle 500. In FIG. 5A, the vehicle is in a normal orientation, namely neither inclined forward nor inclined backward, where the pitch angle equals 0 degree. A camera 306 used to pick up the images of a front area of the vehicle 500 is installed in the vehicle 500. A broken line L1 in FIG. 5A indicates the upper limit of the camera's field of view, whereas a broken line L2 indicates the lower limit thereof. FIG. 5B shows an image 510 picked up by the camera 306 in the state shown in FIG. 5A. As shown in FIG. 5B, the leading vehicle 502 is located in a position whose x coordinate is approximately a middle and whose y coordinate is the upper end.

FIG. 5C shows a state where the vehicle 500 is inclined backward. For example, the vehicle 500 inclines backward when the vehicle 500 accelerates while running or the amount of load in a rear trunk is large. If the vehicle 500 inclines backward as described above, the field of view of the camera 306 fixed to the vehicle 500 shifts upward. FIG. 5D shows an image 512 picked up by the camera 306 in the state shown in FIG. 5C. As shown in FIG. 5D, the leading vehicle 502 is located in a position whose y coordinate is shifted downwardly as compared with FIG. 5B.

As described above, when the orientation or posture of the vehicle varies, the positional coordinates of the forward vehicle in the image picked up by the camera 306 also vary. As a result, the position of the forward vehicle cannot be detected accurately and therefore glare may be experienced by the driver of the forward vehicle. Thus, the present embodiment provides a technique with which glare is less likely to be experienced by the driver of the forward vehicle even if the vehicle orientation varies.

Referring back to FIG. 4, the vehicle control unit 302 calculates a pitch angle $\theta p$ based on information sent from two vehicle height sensors 314 installed in a front wheel and a rear wheel of the vehicle, respectively. In other words, if a vehicle -height variation on the front wheel side is denoted by dHf, a vehicle-height variation on the real wheel side is denoted by dHr and a wheel base of the vehicle is denoted by WB, the pitch angle $\theta p$ can be calculated using the following Equation (1).

$$\theta p = tan^{-1}\{dHf - dHr/WB\} \quad --- \quad (1)$$

Also, if a vehicle height sensor is provided in the rear wheel only and a vehicle variation on the front wheel side is estimated from an output value of the vehicle height sensor, then the pitch angle $\theta p$ can be calculated. This modification to the present embodiment is advantageous in terms of cost because a single piece of vehicle sensor suffices.

Or the pitch angle $\theta p$ may be calculated based on information on the inclination angle of a vehicle and information on the inclination angle of road-surface. Here, the vehicle inclination angle information, which is outputted from the inclination angle sensor 316, is information on the inclination angle of the vehicle relative to the horizontal direction, and the road-surface inclination angle information contained in the navigation system 312 is information on the inclination angle of a road surface on which the vehicle is positioned. If the inclination angle of the vehicle is denoted by $\theta c$ and the inclination angle of the road surface is denoted by $\theta r$, the pitch angle $\theta p$ can be calculated using the following Equation (2).

$$\theta p = \theta c - \theta r \quad --- \quad (2)$$

After the pitch angle $\theta p$ is evaluated, the vehicle control unit 302 corrects the positional coordinates of the vehicle in the image picked up by the camera 306, based on the pitch angle $\theta p$. If the y coordinate of the forward vehicle in the image picked up by the camera 306 is denoted by ya, the view angle in the y-axis direction is denoted by $\theta ya$ and the number of pixels in the y-axis direction is denoted by py, then the y coordinate ya' of the forward vehicle after correction is expressed by the following Equation (3).

$$ya' = ya + \theta p/\theta ya \times py \quad --- \quad (3)$$

Or the vehicle control unit 302 may correct the positional coordinates of the forward vehicle, based on an aberration correction coefficient, used to correct the aberration of a lens in the camera 306, stored in the storage 318 and the pitch angle $\theta p$. If the aberration correction coefficient defined by the (x, y) coordinates of an image picked up by the camera 306 is denoted by fa(x, y), the y-coordinate ya' of the forward vehicle after correction, containing a aberration correction, is expressed by the following Equation (4). In this case, the positional coordinates of the forward vehicle can be detected more accurately.

$$ya' = ya + \theta p/\theta ya \times py \times fa(x, y) \quad --- \quad (4)$$

According to the present embodiment, the y coordinate of the forward vehicle is corrected as described above, so that the accurate positional coordinates of the forward vehicle can be detected. The illumination range of the automotive headlamps 210 is controlled based on the positional coordinates of the vehicle after correction, so that the automotive headlamps 210 are less likely to give glare to the driver of the forward vehicle.

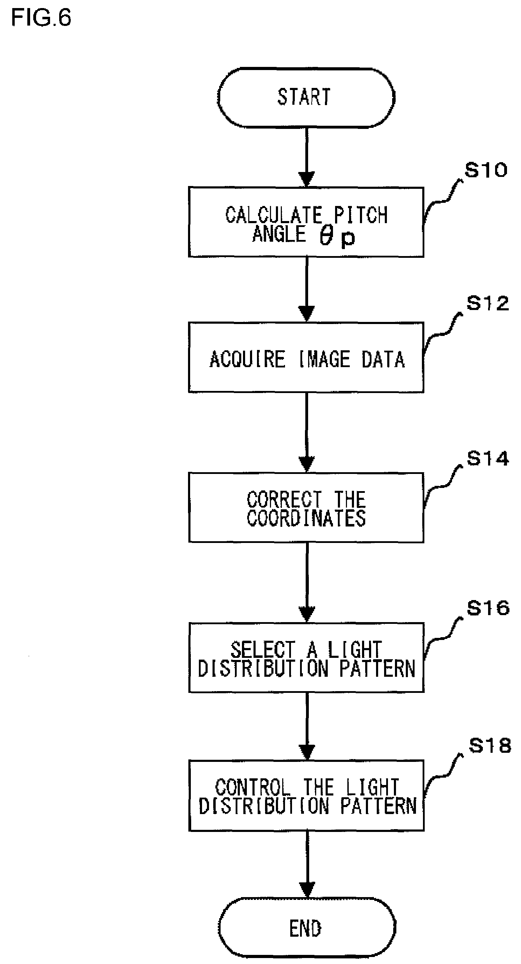

FIG. 6 is a flowchart to explain a control of light distribution patterns by the light distribution control system 100 according to the present embodiment. The control explained as follows is a control of the light distribution pattern in the ADB mode. The control of the light distribution pattern as shown in the flowchart of FIG. 6 is performed repeatedly with predetermined timing.

First, the vehicle control unit 302 calculates the pitch angle θp of a vehicle, based on the information from the vehicle height sensor 314 (S10). Then the vehicle control unit 302 acquires data of the image picked up by the camera 306 (S12). Then the positional coordinates of the vehicle in the image are corrected using the pitch angle θp (S14).

Then the vehicle control unit 302 selects a light distribution pattern, which does not cause the driver of the forward vehicle to experience glare, by referencing the positional coordinates of the vehicle after correction (S16), and instructs the illumination control unit 228 to illuminate the thus selected light distribution pattern (S18).

The present invention has been described based upon embodiments, which are intended to be illustrative only. It will be clear to those skilled in the art that various modifications to constituting elements and processes could be developed, such modifications being within the scope of the present invention.

**Claims**

1. A light distribution control system (100) for controlling an automotive headlamp, the system comprising:

   an automotive headlamp (210) capable of controlling a range of illumination in a front area of a vehicle;
   an image pickup means (306) configured to pick up an image of the front area of the vehicle;
   a forward vehicle detection means (302) configured to detect positional coordinates of a forward vehicle in said image capturing the front area of the vehicle;
   pitch angle detection means (302, 316) configured to detect a pitch angle of the vehicle;
   a storage means (318) configured to store an aberration correction factor used to correct an aberration of a lens mounted on the image pickup means (306);
   a correction means (302) configured to correct the positional coordinates of the forward vehicle detected by the forward vehicle detection means (302), based on the pitch angle and
   a control means (302) configured to control the illumination range of the automotive headlamp (210), based on the positional coordinates corrected by the correction means (302),
   **characterized in that**
   the pitch angle detection means (302, 316) includes :

   an inclination angle sensor (316) configured to detect an inclination of the vehicle, wherein the inclination of the vehicle comprises the inclination of the vehicle relative to a horizontal plane;
   an inclination information acquiring means (302) configured to acquire inclination information on a road surface on which the vehicle is positioned, wherein the inclination information comprises the inclination of the road surface relative to the horizontal plane; and

   a pitch angle calculating means (302) configured to calculate the pitch angle of the vehicle by subtracting the inclination of the road surface from the inclination of the vehicle
   and **characterized in that** the correction means (302) is further configured to correct the positional coordinates based on the aberration correction factor.

2. A light distribution control system according to claim 1, wherein the image pickup means is selected from the group comprising a camera and infrared radar.

**Patentansprüche**

1. Lichtverteilungs-Steuersystem (100) zum Steuern eines Fahrzeug-Scheinwerfers, das System umfassend:

   einen Fahrzeug-Scheinwerfer (210), der einen Beleuchtungsbereich in einem Bereich vor einem Fahrzeug regeln kann;
   ein Bildaufnahmemittel (306), das dafür konfiguriert ist, ein Bild des Bereichs vor dem Fahrzeug aufzunehmen;
   ein Detektionsmittel (302) für vordere Fahrzeuge, das dafür konfiguriert ist, Positionskoordinaten eines vorderen Fahrzeugs in dem Bild zu detektieren, das den Bereich vor dem Fahrzeug erfasst;

Nickwinkel-Detektionsmittel (302, 316), die dafür konfiguriert sind, einen Nickwinkel des Fahrzeugs zu detektieren;

ein Speichermittel (318), das dafür konfiguriert ist, einen Aberrations-Korrekturfaktor zu speichern, der zum Korrigieren einer Aberration einer Linse verwendet wird, die am Bildaufnahmemittel (306) angebracht ist;

ein Korrekturmittel (302), das dafür konfiguriert ist, auf der Grundlage des Nickwinkels die Positionskoordinaten des vorderen Fahrzeugs zu korrigieren, das vom Detektionsmittel (302) für vordere Fahrzeuge detektiert wird; und

ein Regelungsmittel (302), das dafür konfiguriert ist, auf der Grundlage der durch das Korrekturmittel (302) korrigierten Positionskoordinaten den Beleuchtungsbereich des Fahrzeug-Scheinwerfers (210) zu regeln, **dadurch gekennzeichnet, dass**

die Nickwinkel-Detektionsmittel (302, 316) aufweisen:

einen Neigungswinkelsensor (316), der dafür konfiguriert ist, eine Neigung des Fahrzeugs zu detektieren, wobei die Neigung des Fahrzeugs die Neigung des Fahrzeugs relativ zu einer horizontalen Ebene umfasst;

ein Neigungsdaten-Erfassungsmittel (302), das dafür konfiguriert ist, Neigungsdaten zu einer Straßenoberfläche zu erfassen, auf der das Fahrzeug positioniert ist, wobei die Neigungsdaten die Neigung der Straßenoberfläche relativ zur horizontalen Ebene umfassen; und

ein Nickwinkel-Berechnungsmittel (302), das dafür konfiguriert ist, den Nickwinkel des Fahrzeugs durch Subtrahieren der Neigung der Straßenoberfläche von der Neigung des Fahrzeugs zu berechnen,

und **dadurch gekennzeichnet, dass** das Korrekturmittel (302) des Weiteren dafür konfiguriert ist, die Positionskoordinaten auf der Grundlage des Aberrations-Korrekturfaktors zu korrigieren.

2. Lichtverteilungs-Steuersystem nach Anspruch 1, wobei das Bildaufnahmemittel aus der Gruppe ausgewählt ist, die eine Kamera und ein Infrarot-Radar umfasst.

**Revendications**

1. Un système de commande de distribution de lumière (100) pour commander un phare d'automobile, le système comprenant:

un phare d'automobile (210) capable de commander une gamme d'éclairage dans une zone avant d'un véhicule;

un moyen de capture d'image (306) configuré pour capter une image de la zone avant du véhicule;

un moyen de détection de véhicule vers l'avant (302) configuré pour détecter des coordonnées de position d'un véhicule vers l'avant dans ladite image de capture de la zone avant du véhicule;

des moyens de détection d'angle d'inclinaison (302, 316) configurés pour détecter un angle d'inclinaison du véhicule;

un moyen de stockage (318) configuré pour stocker un facteur de correction d'aberration utilisé pour corriger une aberration d'une lentille montée sur le moyen de capture d'image (306),

un moyen de correction (302) configuré pour corriger les coordonnées de position du véhicule vers l'avant détectées par le moyen de détection de véhicule vers l'avant (302),

sur la base de l'angle d'inclinaison; et

un moyen de commande (302) configuré pour commander la gamme d'éclairage du phare de l'automobile (210), sur la base des coordonnées de position corrigées par le moyen de correction (302), **caractérisé en ce que**

les moyens de détection d'angle d'inclinaison (302, 316) comprennent :

un capteur d'angle d'inclinaison (316) configuré pour détecter une inclinaison du véhicule, dans lequel l'inclinaison du véhicule comprend l'inclinaison du véhicule par rapport à un plan horizontal ;

un moyen d'acquisition d'information d'inclinaison (302) configuré pour acquérir de l'information d'inclinaison sur une surface de route sur laquelle le véhicule est en place, dans lequel l'information d'inclinaison comprend l'inclinaison de la surface de route par rapport à un plan horizontal ; et

un moyen de calcul d'angle d'inclinaison (302) configuré pour calculer l'angle d'inclinaison du véhicule en soustrayant l'inclinaison de la surface de la route de l'inclinaison du véhicule,

et **caractérisé en ce que** le moyen de correction (302) est en outre configuré pour corriger les coordonnées de position sur la base du facteur de correction d'aberration.

2. Un système de commande de distribution de lumière conforme à la revendication 1, **caractérisé en ce que** le moyen de capture d'image est choisi à partir du groupe comprenant une caméra et un radar infrarouge.

FIG.1

EP 2 281 718 B1

FIG.2

## FIG.3A

Lo

## FIG.3B

Hi

## FIG.3C

LHi

## FIG.3D

RHi

## FIG.3E

LoV

## FIG.3F

UA

S

# FIG.4

Block diagram showing:
- STEERING SENSOR (308)
- VEHICLE SPEED SENSOR (310)
- CAMERA (306)
- LIGHT SWITCH (304)
- STORAGE (318)
- VEHICLE CONTROL UNIT (302)
- NAVIGATION SYSTEM (312)
- VEHICLE HEIGHT SENSOR (314)
- INCLINATION ANGLE SENSOR (316)
- 100
- AUTOMOTIVE HEADLAMP (210)
  - ILLUMINATION CONTROL UNIT (228)
  - LEVELING ACTUATOR (226)
  - SWIVEL ACTUATOR (222)
  - SHADE MOTOR (221)
  - POWER SUPPLY CIRCUIT (230)
  - BULB (14)

FIG.5A

FIG.5B

FIG.5C

FIG.5D

FIG.6

```
          ┌──────────────┐
          │    START     │
          └──────┬───────┘
                 │
                 ▼
        ┌─────────────────────┐   S10
        │  CALCULATE PITCH     │
        │  ANGLE θp            │
        └──────────┬──────────┘
                   │
                   ▼
        ┌─────────────────────┐   S12
        │  ACQUIRE IMAGE DATA  │
        └──────────┬──────────┘
                   │
                   ▼
        ┌─────────────────────┐   S14
        │  CORRECT THE         │
        │  COORDINATES         │
        └──────────┬──────────┘
                   │
                   ▼
        ┌─────────────────────┐   S16
        │  SELECT A LIGHT      │
        │  DISTRIBUTION PATTERN│
        └──────────┬──────────┘
                   │
                   ▼
        ┌─────────────────────┐   S18
        │  CONTROL THE LIGHT   │
        │  DISTRIBUTION PATTERN│
        └──────────┬──────────┘
                   │
                   ▼
          ┌──────────────┐
          │     END      │
          └──────────────┘
```

**EP 2 281 718 B1**

## REFERENCES CITED IN THE DESCRIPTION

**Patent documents cited in the description**

- DE 102006055908 A1
- JP 2008094127 A
- JP 2008037240 A